(19) Europäisches Patentamt
European Patent Office
Office européen des brevets

(11) **EP 2 416 523 A1**

(12) **DEMANDE DE BREVET EUROPEEN**

(43) Date de publication:
**08.02.2012 Bulletin 2012/06**

(51) Int Cl.:
***H04L 9/22*** *(2006.01)*

(21) Numéro de dépôt: **11173633.6**

(22) Date de dépôt: **12.07.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **04.08.2010 FR 1003269**

(71) Demandeurs:
• **STMicroelectronics (Grenoble 2) SAS**
**38000 Grenoble (FR)**

• **STMicroelectronics S.r.l.**
**20041 Agrate Brianza (MI) (IT)**

(72) Inventeurs:
• **Bertoni, Guido**
**20040 CARNATE (IT)**
• **Sozzani, Fabio**
**38100 GRENOBLE (FR)**

(74) Mandataire: **de Roquemaurel, Bruno et al**
**OMNIPAT**
**24 Place des Martyrs de la Résistance**
**13100 Aix en Provence (FR)**

(54) **Procédé de chiffrement d'un flux de données**

(57)   L'invention concerne un procédé de chiffrement ou de déchiffrement d'un flux de données binaires, comprenant des étapes de génération d'un flux binaire de chiffrement (BS) et de combinaison par une opération logique réversible de chaque bit du flux de données binaires à un bit du flux binaire de chiffrement, la génération du flux binaire de chiffrement comprend des étapes consistant à : générer un bloc d'entrée (CB1, CB2, CB3) en appliquant une fonction cryptographique (ENC1, ENC2, ENC3) utilisant une clé secrète (SK) à un bloc (RN, CB1, CB2), et générer le flux binaire de chiffrement à partir du bloc d'entrée en combinant entre eux les bits du bloc d'entrée par des opérations logiques, de manière à éviter que le bloc d'entrée puisse être déterminé à partir du flux binaire de chiffrement uniquement.

Fig. 4

EP 2 416 523 A1

**Description**

La présente invention concerne la protection de données transmises sous la forme d'un flux binaire ou par un bus. La présente invention s'applique notamment, mais non exclusivement à la téléphonie mobile, à la transmission de signaux de télévision numérique, et à la transmission de données à l'intérieur d'un circuit intégré. Plus généralement, l'invention s'applique à toutes les transmissions de données numériques sensibles c'est-à-dire nécessitant d'être protégées contre des accès à ces données par des tiers non autorisés. Ainsi, l'invention peut s'appliquer aux services payants tels que la télévision payante, le commerce électronique, ou aux services administratifs impliquant des transmissions de données confidentielles.

La protection de données numériques est généralement effectuée en chiffrant ces données avant de les transmettre, afin que seul le destinataire des données qui possède une clé secrète appropriée puisse déchiffrer les données chiffrées et ainsi avoir accès aux données émises.

A l'heure actuelle, on assiste à une augmentation conjointe des débits de transmission de données, et du niveau de sécurité requis, c'est-à-dire notamment de la robustesse des algorithmes cryptographiques susceptibles d'être utilisés. Il en résulte que la puissance de calcul nécessaire pour réaliser les opérations de chiffrement et de déchiffrement, a tendance à augmenter de manière exponentielle.

Il existe des procédés de chiffrement par bloc ("Bloc Cipher"). Ces procédés offrent généralement une robustesse élevée, mais nécessitent des moyens ou temps de calcul importants qui sont incompatibles avec les débits de transmission visés par la présente invention.

Il existe également des procédés de chiffrement par flux ("Stream Cipher") dans lesquels chaque bit d'un flux de bits est combiné par une opération logique réversible, telle que OU Exclusif, avec un bit d'un flux de bits de chiffrement pseudo aléatoire généré en continu au fur et à mesure de l'arrivée des données à transmettre. Ces procédés sont adaptés au traitement de flux binaires ayant des débits élevés, et ne nécessitent pas de moyens de calcul importants. Toutefois, ces procédés présentent une robustesse moins élevée que les procédés de chiffrement par bloc. Ainsi, le document "Dismantling SecureMemory, CryptoMemory and CryptoRF", de Flavio D. Garcia, Peter van Rossum, Roel Verdult, Ronny Wichers Schreur, Institute for Computing and Information Sciences Radboud University Nijmegen, The Netherlands, 30-03-2010, décrit un procédé de chiffrement par flux et une méthode d'attaque de ce procédé.

Il est donc souhaitable de proposer un procédé de chiffrement qui soit à la fois robuste et compatible avec des débits de transmission élevés, tels que ceux rencontrés dans le domaine de la télévision numérique, tout en mettant en oeuvre des moyens de calcul présentant un coût compatible avec les applications grand public.

Des modes de réalisation concernent un procédé de chiffrement ou de déchiffrement d'un flux de données binaires, comprenant des étapes de génération d'un flux binaire de chiffrement et de combinaison par une opération logique réversible de chaque bit du flux de données binaires à un bit du flux binaire de chiffrement. Selon un mode de réalisation, la génération du flux binaire de chiffrement comprend des étapes consistant à : générer un bloc d'entrée en appliquant une fonction cryptographique utilisant une clé secrète à un bloc de donnée, et générer le flux binaire de chiffrement à partir du bloc d'entrée en combinant entre eux les bits du bloc d'entrée par des opérations logiques, de manière à éviter que le bloc d'entrée puisse être déterminé à partir du flux binaire de chiffrement uniquement.

Selon un mode de réalisation, le procédé comprend des étapes de générations successives de blocs d'entrée en appliquant la fonction cryptographique à un bloc d'entrée obtenu précédemment.

Selon un mode de réalisation, la génération du flux binaire de chiffrement est effectuée par cycles au cours de chacun desquels plusieurs bits du flux binaire de chiffrement sont générés, la génération d'un bloc d'entrée ayant une durée égale à plusieurs dizaines de cycles de génération du flux binaire de chiffrement.

Selon un mode de réalisation, un bloc de donnée initial est généré aléatoirement, utilisé pour générer un premier bloc de donnée par application de la fonction cryptographique, et transmis par un émetteur du flux de données à un récepteur du flux de données.

Selon un mode de réalisation, la génération du flux binaire de chiffrement est effectuée par cycles comprenant chacun des étapes de combinaison entre eux de plusieurs des bits du bloc d'entrée pour générer plusieurs bits du flux de chiffrement, et de mise à jour d'une partie du bloc d'entrée en combinant entre eux plusieurs des bits du bloc d'entrée, de manière à ce qu'à l'issue d'un certain nombre de cycles, chaque bit du bloc d'entrée dépende de tous les bits d'un bloc d'entrée initial.

Selon un mode de réalisation, la fonction cryptographique est de type AES, DES, Triple DES, Twofish, ou Serpent, ou encore une fonction de hachage appliquée à la donnée à chiffrer et à la clé secrète.

Des modes de réalisation concernent également un dispositif de chiffrement par flux, comprenant un circuit de génération d'un flux binaire de chiffrement et un circuit logique de combinaison réversible de chaque bit d'un flux de données à chiffrer ou à déchiffrer avec un bit du flux binaire de chiffrement. Selon un mode de réalisation, le circuit de génération comprend un circuit de chiffrement par bloc pour générer un bloc d'entrée, et un circuit logique de combinaison des bits du bloc d'entrée, fournissant le flux binaire de chiffrement à partir du bloc d'entrée, le circuit mettant en oeuvre le procédé défini précédemment.

Selon un mode de réalisation, le circuit logique de combinaison comprend un circuit logique de fourniture pour générer des bits du flux binaire de chiffrement en fonction de bits du bloc d'entrée, et un circuit logique de mise à jour pour combiner des bits du bloc d'entrée et remplacer des bits du bloc d'entrée par des bits résultant de la combinaison.

Selon un mode de réalisation, le circuit logique de mise à jour est configuré pour que chaque bit du bloc d'entrée mis à jour dépende de tous les bits du bloc d'entrée fournit par le circuit de chiffrement par bloc, à l'issue d'un certain nombre de cycles de traitement du circuit logique de mise à jour.

Selon un mode de réalisation, le circuit logique de combinaison comprend un registre à décalage de bloc recevant le bloc chiffré qui est décalé à chaque cycle de traitement du circuit logique de combinaison d'un nombre de bits égal à un nombre de bits du flux binaire de chiffrement fourni à chaque cycle de traitement du circuit logique de combinaison, et des portes logiques pour fournir les bits du flux binaire de chiffrement en combinant plusieurs des bits du registre à décalage.

Selon un mode de réalisation, le circuit logique de combinaison comprend un registre à décalage de bloc recevant le bloc chiffré qui est décalé à chaque cycle de traitement du circuit logique de combinaison d'un nombre de bits égal à un nombre de bits du flux binaire de chiffrement fourni à chaque cycle de traitement du circuit logique de combinaison, et des circuits logiques non linéaires pour combiner des bits du registre à décalage et introduire des bits obtenus par les circuits logiques non linéaires dans le registre à décalage.

Selon un mode de réalisation, les circuits logiques non linéaires comprennent chacun plusieurs entrées de mot recevant chacune un mot du registre à décalage de bloc, plusieurs registres à décalage de mot par entrée de mot, pour faire tourner sur eux-mêmes d'un certain nombre de bits les bits d'une entrée de mot, plusieurs fonctions logiques de combinaison pour combiner entre eux les bits de plusieurs mots contenus dans un registre à décalage de mot, et fournissant chacune un mot, et des portes logiques pour combiner entre eux les bits des mots de sortie des fonctions logiques de combinaison et fournir un mot de sortie qui est introduit dans le registre à décalage de bloc.

Selon un mode de réalisation, le circuit logique de combinaison est configuré pour fournir des bits du flux binaire de chiffrement à chacun des cycles d'un signal d'horloge cadençant le circuit logique de combinaison.

Selon un mode de réalisation, le circuit logique de combinaison comprend un registre à décalage de bloc recevant le bloc chiffré qui est décalé à chacun des cycles d'un signal d'horloge cadençant le circuit logique de combinaison, le circuit logique de combinaison étant configuré pour mettre à jour au moins une partie du registre à décalage de bloc à chacun des cycles du signal d'horloge, en utilisant une partie la plus grande possible du registre à décalage de bloc, sans pénaliser la durée des cycles d'horloge.

Des exemples de réalisation de l'invention seront décrits dans ce qui suit, à titre non limitatif en relation avec les figures jointes parmi lesquelles :

la figure 1 représente schématiquement deux dispositifs en communication, mettant en oeuvre un dispositif de chiffrement,
la figure 2 illustre schématiquement le dispositif de chiffrement selon un mode de réalisation,
la figure 3 représente schématiquement des séquences d'étapes de génération de flux binaires de chiffrement pour les deux dispositifs de la figure 1,
la figure 4 illustre schématiquement un mode de fonctionnement du dispositif de chiffrement,
la figure 5 représente schématiquement un circuit du dispositif de chiffrement, selon un mode de réalisation,
la figure 6 est un exemple de schéma électrique d'un circuit du dispositif de chiffrement, selon un mode de réalisation,
la figure 7 est un exemple de schéma électrique d'un circuit du dispositif de chiffrement, selon un mode de réalisation.

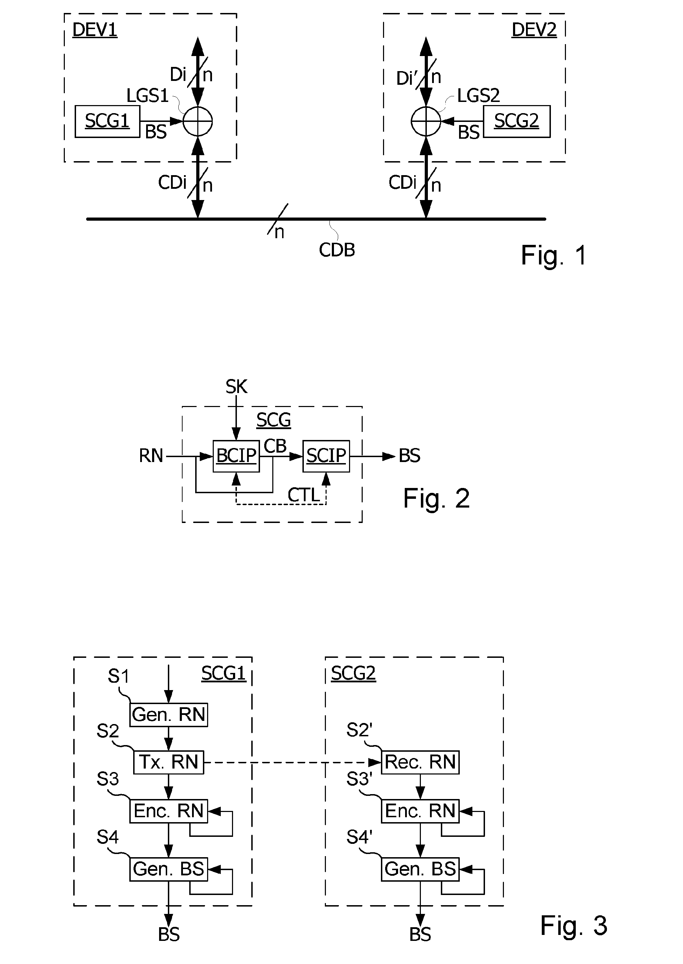

La figure 1 représente deux dispositifs DEV1, DEV2 en communication l'un avec l'autre par l'intermédiaire d'une liaison de données CDB. Pour sécuriser les données transmises, chacun des deux dispositifs est relié à la liaison CDB, par l'intermédiaire d'un circuit logique LGS1, LGS2. Chacun des circuits logiques LGS1, LGS2 reçoit par ailleurs un ou plusieurs flux binaires de chiffrement SC d'un circuit de génération de flux de chiffrement SCG1, SCG2. Chacun des circuits logiques LGS1, LGS2 combine un flux binaire de données émis par l'un des dispositifs DEV1, DEV2 et reçu par l'autre des dispositifs DEV1, DEV2, avec un flux binaire de chiffrement BS.

La liaison de communication CDB peut comprendre un bus numérique à un ou n fils, et/ou une liaison de transmission sans fil, telle qu'une liaison WiFi ou équivalent. Chacun des circuits logiques LGS1, LGS2 peut comprendre une ou plusieurs portes logiques, selon le nombre de flux binaires en parallèle à traiter en sortie des dispositifs DEV1, DEV2. Ainsi, lorsque le dispositif DEV1 émet un bit de donnée $D_i$, le circuit LGS1 transmet un bit de donnée chiffré $CD_i$ à la liaison CDB, tel que $CD_i = LO(D_i, BS_i)$, LO étant une opération logique appliquée par le circuit LGS1 au bit de donnée $D_i$ et à un bit $BS_i$ correspondant du flux binaire de chiffrement BS généré par le circuit SCG1, SCG2. L'opération LO est réversible c'est-à-dire qu'il existe une opération complémentaire LO' qui permet de déchiffrer un bit chiffré $CD_i$ pour obtenir le bit de donnée $D_i$ correspondant à partir du bit $CD_i$ et du bit $BS_i$ qui a été utilisé pour obtenir le bit $CD_i$ : $D_i = LO'(CD_i, BS_i)$. L'opération complémentaire LO' est mise en oeuvre par le circuit LGS2 pour déchiffrer le flux binaire reçu. Chaque bit de donnée chiffré $CD_i$ est transmis par la liaison CDB et reçu par le circuit LGS2 qui lui applique l'opération LO' en utilisant le même bit BSi du flux binaire de chiffrement qui est généré par le circuit LGS2 de la même manière que le circuit LGS1. Ainsi, l'opération logique LO est par exemple l'opération OU Exclusif. Dans ce cas, les opérations LO et LO' sont identiques puisque $CDi \oplus BSi = (Di \oplus BSi) \oplus BSi = Di \oplus (BSi \oplus BSi) = Di \oplus 0 = Di$, "$\oplus$" étant l'opérateur OU Exclusif.

Pour déchiffrer les données reçues du dispositif DEV1, le circuit LGS2 génère donc le même flux binaire de déchiffrement que celui utilisé lors du chiffrement de ces données.

La figure 2 représente un mode de réalisation de chacun des circuits de génération de flux de chiffrement SCG1, SCG2. Sur la figure 2, le circuit SCG comprend un circuit de chiffrement par bloc BCIP, et un circuit logique de combinaison SCIP. Le circuit BCIP comprend une entrée de bloc de donnée à chiffrer, une entrée de clé secrète SK et une sortie de bloc de donnée chiffré CB, connectée à l'entrée de bloc à chiffrer du circuit BCIP et à une entrée du circuit SCIP. Le circuit BCIP applique une fonction cryptographique au bloc de donnée fourni en entrée et fournit en sortie un bloc de donnée chiffré CB. Le circuit SCIP génère le flux binaire de chiffrement BS en combinant des bits du bloc chiffré CB fourni par le circuit BCIP. Le circuit SCIP échange avec le circuit BCIP des signaux de contrôle et de synchronisation CTL, notamment pour gérer les accès à une interface de communication entre les circuits BCIP et SCIP. Lors d'une première itération, le circuit BCIP reçoit sur son entrée de bloc à chiffrer un nombre RN qui peut être généré aléatoirement. Lors de plusieurs itérations suivantes, l'entrée de bloc à chiffrer du circuit BCIP reçoit un bloc chiffré généré précédemment. Le circuit BCIP met en oeuvre par exemple une fonction de chiffrement symétrique par bloc, telle que AES (Advanced Encryption Standard), DES (Data Encryption Standard), Triple DES, Twofish, Serpent, etc. Le circuit BCIP peut également mettre en oeuvre une fonction de hachage appliquée à la donnée à chiffrer et à la clé secrète SK, telle que MD5 (Message Digest 5) ou SHA-1 ou -2 (Secure Hasch Algorithm).

Pour que le circuit SCG2 puisse générer le flux binaire de chiffrement BS utilisé pour chiffrer les données reçues du circuit LGS1, le circuit SCG2 connaît le nombre aléatoire RN et partage avec le circuit SCG1 la clé secrète SK. Le nombre aléatoire RN peut être transmis du circuit LGS1 au circuit LGS2 par tout moyen, et il n'est pas nécessaire que cette transmission soit sécurisée.

L'architecture représentée sur les figures 1 et 2 présente l'avantage de ne nécessiter qu'un circuit de calcul de chiffrement par bloc par dispositif émetteur ou destinataire de données chiffrées. Il peut en effet être noté que les circuits SGC1, SGC2 ne comportent pas de circuit de déchiffrement par bloc réalisant un traitement inverse de celui réalisé par le circuit BCIP.

La figure 3 représente des séquences d'étapes exécutées par les circuits de génération de flux de chiffrement SCG1, SCG2, lorsque le dispositif DEV1 associé au circuit SCG1 envoie des données au dispositif DEV2 associé au circuit SCG2. Le circuit SCG1 exécute des étapes S1 à S4, tandis que le circuit SCG2 exécute des étapes S2' à S4'. A l'étape S1, le circuit SCG1 génère un nombre aléatoire RN. A l'étape S2, le circuit SCG1 envoie le nombre RN au dispositif DEV2. A l'étape S2', le circuit SCG2 reçoit le nombre RN. A l'étape S3, le circuit BCIP du circuit SCG1 chiffre le nombre RN pour obtenir un bloc chiffré CB, et répète cette opération un certain nombre de fois à partir du dernier bloc chiffré obtenu pour obtenir un nouveau bloc chiffré. Le circuit SCG1 transmet chaque bloc CB chiffré obtenu au circuit SCIP du circuit SCG1. A l'étape S4, le circuit SCIP du circuit SCG1 génère des bits d'un flux binaire BS à partir du dernier bloc chiffré CB transmis par le circuit BCIP. L'étape S4 est exécutée autant de fois que nécessaire pour générer un flux binaire de chiffrement correspondant à la taille du flux binaire de données à chiffrer. Parallèlement, suite à l'étape S2', le circuit SCG2 exécute des étapes S3' et S4' analogues aux étapes S3 et S4, autant de fois que nécessaire, à partir du nombre RN reçu, pour générer un flux binaire identique au flux binaire BS généré par le circuit SCG1.

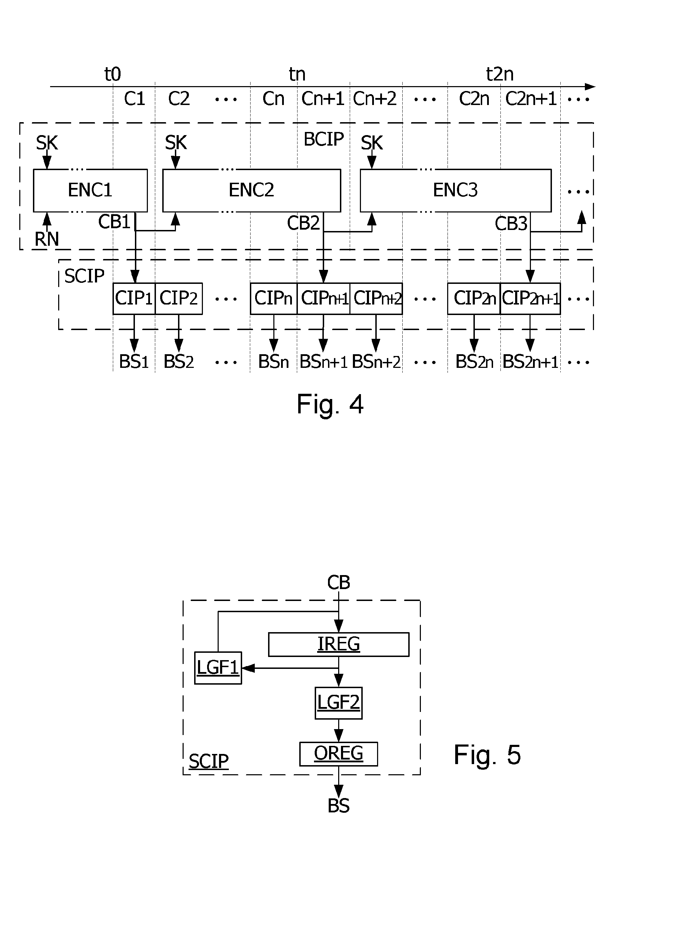

La figure 4 illustre le fonctionnement de chacun des circuits SCG1, SCG2 pour générer le flux BS. Lors d'un premier calcul de chiffrement ENC1, le circuit BCIP génère un premier bloc chiffré CB1 à partir d'un nombre RN par exemple généré aléatoirement, et de la clé secrète SK, fournis en entrée. Le bloc CB1 est fournit en entrée (à la place du nombre RN) d'un second calcul de chiffrement ENC2 réalisé par le circuit BCIP. Parallèlement, le bloc CB1 est fourni au circuit SCIP, ce qui déclenche à l'instant t0 une série de cycles C1, C2, C3, ... Cn de génération de bits d'un flux binaire de chiffrement BS. A chaque cycle C1..Cn, le circuit SCIP effectue une opération de génération de bits du de flux binaire CIP1, CIP2, CIP3, ... CIPn pour générer un ou plusieurs bits BS1, BS2, BS3, ... BSn du flux binaire BS. A l'issue des n cycles C1..Cn, à un instant tn, le calcul de chiffrement par bloc ENC2 se termine et fournit un second bloc chiffré CB2 au circuit SCIP et en entrée du circuit BCIP pour un troisième calcul de chiffrement par bloc ENC3. Ainsi, le circuit SCIP fonctionne de manière autonome durant ces n cycles. Pendant que le calcul ENC3 se déroule, le circuit SCIP effectue à partir de l'instant tn, à chacun des n cycles suivants Cn+1, ..., C2n une opération de génération de bits de flux binaire CIPn+1, ... CIP2n fournissant des bits BSn+1, ... BS2n, à partir du bloc chiffré CB2. Au cycle suivant C2n+1 commençant à l'instant t2n, le calcul ENC3 fournit un bloc chiffré CB3 qui est utilisé durant n cycles à partir du cycle C2n+1 pour générer des bits de flux de chiffrement BS2n+1 ... A chaque calcul ENC1, ENC2, ENC3, ..., la même clé SK est utilisée. Par ailleurs, après un certain nombre de calculs de chiffrement successifs effectués par le circuit BCIP à partir d'un nombre RN, un nouveau nombre RN peut être généré et transmis au circuit BCIP et au circuit SCG2.

Les deux circuits BCIP et SCIP peuvent fonctionner à une fréquence d'horloge différente. Ainsi, soit FB la fréquence d'horloge du circuit BCIP, LB, le nombre de cycles d'horloge du circuit BCIP nécessaires à la fourniture d'un bloc chiffré CB, et FC la fréquence d'horloge du circuit SCIP, le nombre de cycles minimum TR de l'horloge du circuit SCIP nécessaires au circuit BCIP pour générer un bloc chiffré CB, ou durant lesquels le circuit SCIP fonctionne de manière autonome, peut être calculé grâce à l'équation suivante :

$$TR = LB \times FC/FB \qquad\qquad (1)$$

A titre d'exemple, si les fréquences FB et FC sont de 100 MHz et 400 MHz, et si la fourniture d'un bloc CB nécessite 15 cycles de l'horloge du circuit BCIP, le nombre de cycles minimum TR est égal à 60 cycles. Si la taille d'un bloc CB est de 128 bits et que le circuit SCIP fournit 32 bits du flux binaire de chiffrement BS à chaque cycle d'horloge du circuit SCIP, le circuit BCIP fournit environ 853 Mbits/s, tandis que le circuit SCIP fournit 12.8 Gbits/s. Typiquement, la durée d'un cycle de traitement du circuit SCIP est telle que plusieurs dizaines de cycles de traitement Ci peuvent se dérouler pendant le traitement de génération d'un bloc chiffré CB. Il en résulte que le procédé décrit, basé sur une combinaison d'un chiffrement par bloc et d'une génération de flux binaire de chiffrement appliqué aux blocs chiffrés fournis par le chiffrement par bloc, apparaît bien adapté pour fournir un flux binaire de chiffrement à une fréquence élevée.

Il est à noter que le bloc chiffré qui est fourni en entrée du circuit BCIP au début d'une itération suivant une première itération n'est pas nécessairement le dernier bloc chiffré par le circuit BCIP, mais peut être plus généralement un bloc précédemment généré par le circuit BCIP.

La figure 5 représente le circuit SCIP selon un mode de réalisation. Le circuit SCIP comprend un registre d'entrée IREG, un registre de sortie OREG, un circuit logique LGF1 mettant en oeuvre une fonction de mise à jour du registre IREG à chaque cycle de fonctionnement du circuit SCIP, et un circuit logique LGF2 qui génère à chaque cycle de traitement du circuit SCIP une partie du flux binaire de chiffrement BS dans le registre OREG, en fonction du contenu du registre IREG.

Le circuit SCIP est configuré pour empêcher que le flux binaire de chiffrement puisse être déterminé à partir d'autres données. A cet effet, le circuit LGF2 est configuré pour empêcher que le contenu du registre d'entrée IREG puisse être déterminé à partir du contenu du registre de sortie OREG, même en analysant le contenu du registre OREG pendant plusieurs cycles. Le circuit SCIP peut également être configuré pour satisfaire aux conditions suivantes :

le registre d'entrée IREG est le plus petit possible,
le circuit LGF2 est configuré pour fournir des bits du flux binaire de chiffrement BS à chaque cycle d'horloge du circuit SCIP,
le circuit LGF1 est configuré pour mettre à jour au moins une partie du registre IREG à chaque cycle d'horloge du circuit SCIP, en utilisant une partie la plus grande possible du registre IREG, sans pénaliser la durée des cycles d'horloge du circuit SCIP. En effet, plus la partie mise à jour du registre IREG est grande, plus le circuit SCIP est grand, et donc plus les interconnexions entre les différentes parties du circuit sont longues et imposent des temps de transmission longs. Il importe que le débit du flux binaire de chiffrement BS soit compatible avec le débit de la transmission à chiffrer (ou à déchiffrer), le débit du flux binaire BS étant égal à la durée des cycles de traitement du circuit SCIP, multipliée par le nombre de bits dans le registre de sortie OREG.

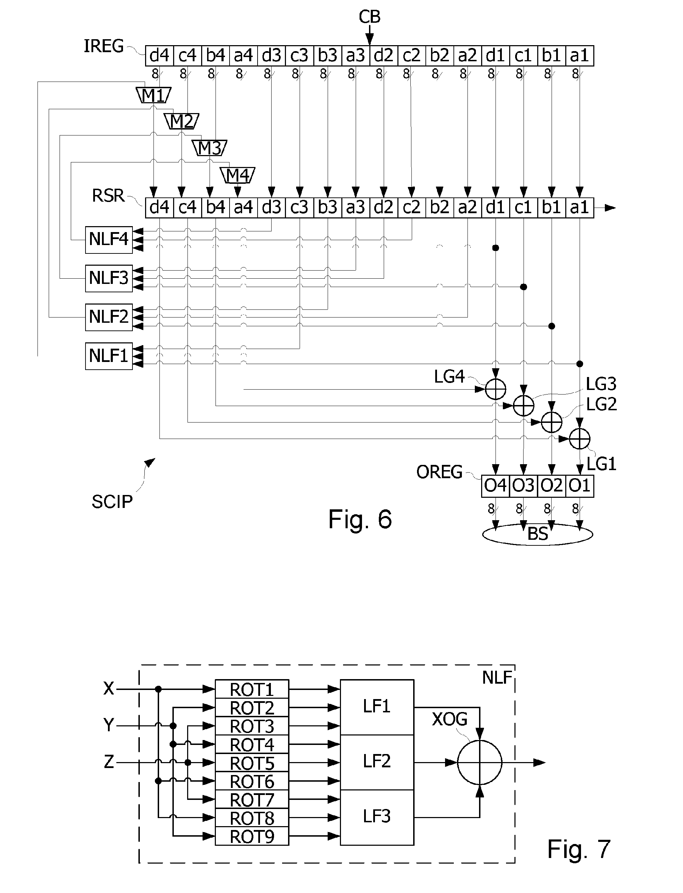

La figure 6 représente un exemple de réalisation du circuit SCIP. Le circuit BCIP comprend un registre d'entrée IREG, un registre à décalage RSR, quatre multiplexeurs M1, M2, M3, M4, quatre circuits logiques NLF1, NLF2, NLF3, NLF4 réalisant une fonction logique non linéaire, quatre circuits à base de portes logiques LG1, LG2, LG3, LG4 et un registre de sortie OREG. Le registre IREG est dimensionné pour recevoir au moins une partie importante d'un bloc chiffré CB provenant du circuit BCIP. Le registre à décalage RSR présente la même taille que le registre IREG.

Dans l'exemple de la figure 6, le registre IREG comprend 16 unités de mémoire n bits chacune, reparties en 4 blocs de 4 unités, chaque bloc i rassemblant des unités ai, bi, ci et di (i allant de 1 à 4). Le registre RSR présente une structure analogue au registre IREG, avec quatre blocs de quatre unités mémoire de n bits. Les registres IREG et RSR peuvent ainsi recevoir chacun un bloc de 16xn bits. Chacune des unités de mémoire des blocs 1 à 3 du registre IREG est connectée à des cellules respectives du registre RSR. Les unités a4, b4, c4, d4 du bloc 4 sont reliées à des cellules respectives du registre RSR par l'intermédiaire des multiplexeurs M1, M2, M3, M4. Chacune des cellules a1, b1, c1, d1 du bloc 1 du registre RSR est connectée à une entrée d'un des circuits LG1, LG2, LG3, LG4. Chacune des cellules a4, b4, c4, d4 du bloc 4 du registre RSR est connectée à une autre entrée d'un des circuits LG1, LG2, LG3, LG4. Chacun des circuits NLF1, NLF2, NLF3, NLF4 est connecté en entrée à trois unités de mémoire du registre RSR reparties respectivement dans les blocs 1, 2 et 3. Ainsi, dans l'exemple de la figure 6, le circuit NLF1 est connecté en entrée aux unités a1, b2 et c3. Le circuit NLF2 est connecté en entrée aux unités b1, a2 et b3. Le circuit NLF3 est connecté en entrée aux unités c1, d2 et a3. Le circuit NLF4 est connecté en entrée aux unités d1, c2 et d3. La sortie de chacun des circuits NLFi (i pouvant prendre chacune des valeurs de 1 à 4) est connectée à une entrée du multiplexeur Mi. Le registre OREG comprend 4 unités mémoire 01, 02, 03, 04 de n bits. La sortie de chacun des circuits LG1, LG2, LG3, LG4 est connectée à une unité 01, 02, 03, 04 du registre de sortie OREG. Les circuits LG1 à LG4 appliquent par exemple une opération logique OU Exclusif bit à bit aux mots dans le registre RSR.

A chaque cycle d'horloge, le circuit SCIP fournit donc 4xn bits du flux binaire de chiffrement BS. Si n est égal à 8, les registres IREG et RSR peuvent recevoir chacun 128 bits et le registre OREG 32 bits. Au premier cycle de traitement du circuit SCIP, le registre IREG reçoit un bloc chiffré CB du circuit BCIP. Les multiplexeurs M1 à M4 sont commandés pour transférer le bloc CB intégralement dans le registre RSR. Le contenu du registre RSR est transféré aux circuits NLF1 à NLF4 et LG1 à LG4, et les circuits LG1 à LG4 combinent le premier et le quatrième bloc a1, b1, c1, d1 et a4, b4, c4, d4 du registre RSR, et transfèrent les résultats dans le registre OREG. A la fin du premier cycle, l'unité 01 du registre OREG contient les mots des unités a1 et d4 combinés, l'unité 02 contient les mots des unités b1 et c4 combinés, l'unité 03 contient les mots des unités c1 et b4 combinés, et l'unité 04 contient les mots des unités d1 et a4 combinés. Au second cycle, le registre RSR est décalé vers la droite de 4 unités de n bits. Les mots dans les unités a1 à d1 sont donc remplacés dans le registre RSR par les mots des unités a2 à d2. Les mots des unités a2 à d2 sont remplacés par les mots des unités a3 à d3, et les mots des unités a3 à d3 sont remplacés par les mots des unités a4 à d4. Par ailleurs, les unités a4 à d4 reçoivent les mots en sortie des circuits NLF1 à NLF4. Le registre de sortie OREG reçoit donc les mots des unités a1 à d1 qui étaient contenus initialement dans les unités a2 à d2, combinés chacun à un mot contenu dans les unités a4 à d4, issu des circuits NLF1 à NLF4.

La présence des circuits LG1 à LG4 recombinant des bits de mots du registre d'entrée IREG permet d'éviter que le contenu du registre d'entrée IREG puisse être déterminé à partir du contenu du registre de sortie OREG seulement, même sur plusieurs cycles. En effet, dans l'opération x $\oplus$ y où "$\oplus$" représente l'opérateur logique OU Exclusif, les probabilités que chaque opérande x, y soit à 0 et 1, pour un résultat donné de l'opération, sont identiques. Il est donc impossible de déterminer les valeurs respectives des opérandes à partir du seul résultat. Le résultat de l'opération permet seulement de déterminer si les opérandes sont identiques ou non. Or seulement durant le premier cycle de traitement du circuit SCIP, les bits du flux binaire de chiffrement BS en sortie dans le registre OREG résultent d'une combinaison bit à bit de bits du registre IREG, par une opération logique, telle que OU Exclusif. La connaissance de l'architecture du circuit SCIP et des 4xn premiers bits du flux binaire BS permet seulement de déterminer si chacun bits des quatre premiers mots a1..d1 du registre IREG est identique ou différent d'un des bits des quatre derniers mots a4..d4 du registre d'entrée IREG.

Il convient de noter que le registre IREG est optionnel et peut être omis, puisque le registre RSR reçoit également chaque bloc CB fourni par le circuit BCIP, et qu'il n'est pas nécessaire de conserver un bloc CB durant le calcul effectué par le circuit BCIP pour fournir un nouveau bloc.

Dans un mode de réalisation, les circuits NLF1 à NLF4 sont tous identiques à un circuit NLF. La figure 7 représente un exemple de réalisation du circuit NLF. Le circuit NLF comprend trois entrées de mot X, Y, Z, neuf registres à décalage ROT1 à ROT9, trois fonctions logiques LF1, LF2, LF3 et un circuit de combinaison XOG. Le mot X est fourni aux registres ROT1, ROT6 et ROT8. Le mot Y est fourni aux registres ROT2, ROT4 et ROT9, et le mot Z est fourni aux registres ROT3, ROT5 et ROT7. Les registres à décalage ROT1 à ROT9 sont configurés pour faire appliquer à un mot X, Y ou Z en entrée du circuit NLF une rotation binaire d'un certain nombre de bits. Les mots contenus dans les registres ROT1, ROT2, ROT3 sont fournis à la fonction LF1. Les mots contenus dans les registres ROT4, ROT5, ROT6 sont fournis à la fonction LF2. Les mots contenus dans les registres ROT7, ROT8, ROT9 sont fournis à la fonction LF3. Le circuit de combinaison XOG reçoit les mots en sortie des fonctions LF1, LF2 et LF3 et les combine pour fournir un mot en sortie du circuit NLF.

Le circuit NLF réalise ainsi l'opération logique non linéaire :

$$F(X \ll rot1, Y \ll rot2, Z \ll rot3) \oplus F(Y \ll rot4, Z \ll rot5, X \ll rot6) \oplus$$
$$F(Z \ll rot7, X \ll rot8, Y \ll rot9) \tag{1}$$

dans laquelle F est la fonction logique mise en oeuvre par les fonctions LF1, LF2, LF3, "$\ll$" est l'opérateur de rotation des bits d'un mot, et "$\oplus$" est l'opération logique de combinaison mise en oeuvre par le circuit XOG, qui est par exemple l'opération logique OU Exclusif appliquée bit à bit aux bits des mots d'entrée. Les rotations de bit réalisées par les registres ROT1 à ROT9 qui sont connectés à une même fonction LF1, LF2, LF3 peuvent être différentes. De même, les rotations réalisées par les registres ROT1 à ROT9 qui reçoivent un même mot d'entrée X, Y, Z peuvent également être différentes. Les fonctions LF1, LF2, LF3 peuvent être différentes ou identiques. La fonction logique F peut être une fonction non linéaire de degré supérieur ou égal à 2, sachant que la combinaison d'opérateurs logiques ET, OU ou OU Exclusif réalise une fonction non linéaire de degré 2. La fonction logique F est par exemple l'une des fonctions suivantes :

$$F(X, Y, Z) = (X \cdot Y) + (\overline{X} \cdot Z) \qquad\qquad (2)$$

$$F(X, Y, Z) = (X \cdot Z) + (Y \cdot \overline{Z}) \qquad\qquad (3)$$

$$F(X, Y, Z) = Y \oplus (X + \overline{Z}) \qquad\qquad (4)$$

dans lesquelles "·" représente l'opérateur logique ET, "+" représente l'opérateur logique OU, "⊕" représente l'opérateur logique OU Exclusif et "$\overline{x}$" représente l'opérateur logique NOT(x). Plus généralement, la fonction F peut être choisie de manière à ce que la non linéarité réalisée par la fonction ne se compense pas au fur et à mesure qu'elle est appliquée aux mots du registre RSR à chaque cycle de traitement du circuit SCIP. En effet, par certaines fonctions F, certains mots du registre RSR peuvent après quelques cycles de traitement du circuit SCIP ne dépendre que d'un nombre limité de mots initialement introduits dans le registre RSR à partir du registre IREG. Ainsi, au lieu d'être étendue, la non linéarité serait ainsi restreinte.

Plus généralement, la fonction mise en oeuvre par les circuits NLF1 à NLF4 peut être choisie de manière à maximiser le nombre de bits du registre IREG dont dépend un bit du registre RSR à un cycle de traitement donné du circuit SCIP, et à maximiser le nombre de bits du registre RSR à un cycle de traitement donné, dont dépend chaque bit du registre IREG, étant entendu que ces nombres augmentent d'une manière exponentielle à chaque cycle de traitement.

Ainsi, dans l'exemple décrit ci-dessus du circuit SCIP, chaque mot issu des circuits NLF1 à NLF4 dépend de trois mots du registre RSR, et dans l'exemple du circuit NLF, chaque bit du mot de sortie du circuit dépend de neuf bits des mots d'entrée, si les conditions sur les rotations ROT1 à ROT9 décrites précédemment sont satisfaites. Il peut ainsi être démontré que dans l'exemple des figures 6 et 7, chaque bit du registre RSR dépend de tous les bits du registre IREG après seulement 15 cycles de traitement du circuit SCIP, et chaque bit du registre IREG est utilisé dans tous les bits du registre RSR après seulement 16 itérations

Il apparaîtra clairement à l'homme de l'art que la présente invention est susceptible de diverses variantes de réalisation et diverses applications. En particulier, l'invention n'est pas limitée aux exemples précédemment décrits, mais peut être réalisée par tout circuit combinant un circuit de chiffrement par bloc fournissant un bloc chiffré CB et un circuit logique combinant des bits du bloc chiffré CB de manière à générer un flux binaire BS, dès lors que le flux binaire BS fourni ne permet pas de déterminer seul le bloc en sortie du circuit de chiffrement par bloc. La réalisation du circuit logique est à la portée de l'homme du métier puisqu'elle ne résulte que d'une combinaison de fonctions logiques de base, telles que des portes logiques et des registres à décalage.

Par ailleurs, la génération de plusieurs blocs chiffrés utilisant un bloc chiffré généré précédemment peut ne pas être nécessaire. En effet, comme précédemment décrit, le circuit logique de génération du flux de chiffrement peut fonctionner de manière autonome à partir d'un bloc chiffré pendant de nombreux cycles. La génération de nouveaux blocs chiffrés influe seulement sur la robustesse du procédé de chiffrement par flux résultant.

## Revendications

**1.** Procédé de chiffrement ou de déchiffrement d'un flux de données binaires, comprenant des étapes de génération d'un flux binaire de chiffrement (BS) et de combinaison par une opération logique réversible de chaque bit du flux de données binaires à un bit du flux binaire de chiffrement,
**caractérisé en ce que** la génération du flux binaire de chiffrement comprend des étapes consistant à :

générer un bloc d'entrée (CB1, CB2, CB3) en appliquant une fonction cryptographique utilisant une clé secrète (SK) à un bloc de donnée (RN, CB1, CB2), et
générer le flux binaire de chiffrement (BS) à partir du bloc d'entrée en combinant entre eux les bits du bloc d'entrée par des opérations logiques, de manière à éviter que le bloc d'entrée puisse être déterminé à partir du flux binaire de chiffrement uniquement.

**2.** Procédé selon la revendication 1, comprenant des étapes de générations successives de blocs d'entrée (CB2, CB3) en appliquant la fonction cryptographique à un bloc d'entrée (CB1, CB2) obtenu précédemment.

3. Procédé selon la revendication 2, dans lequel la génération du flux binaire de chiffrement est effectuée par cycles (C1, C2, Cn) au cours de chacun desquels plusieurs bits du flux binaire de chiffrement (BS) sont générés, la génération d'un bloc d'entrée (CB1, CB2, CB3) ayant une durée égale à plusieurs dizaines de cycles de génération du flux binaire de chiffrement.

4. Procédé selon l'une des revendications 1 à 3, dans lequel un bloc de donnée initial (RN) est généré aléatoirement, utilisé pour générer un premier bloc de donnée (CB1) par application de la fonction cryptographique, et transmis par un émetteur (DEV1) du flux de données à un récepteur (DEV2) du flux de données.

5. Procédé selon l'une des revendications 1 à 4, dans lequel la génération du flux binaire de chiffrement (BS) est effectuée par cycles (C1, C2, Cn) comprenant chacun des étapes de combinaison entre eux de plusieurs des bits du bloc d'entrée (CB1) pour générer plusieurs bits du flux de chiffrement, et de mise à jour d'une partie du bloc d'entrée en combinant entre eux plusieurs des bits du bloc d'entrée, de manière à ce qu'à l'issue d'un certain nombre de cycles, chaque bit du bloc d'entrée dépende de tous les bits d'un bloc d'entrée initial.

6. Procédé selon l'une des revendications 1 à 5, dans lequel la fonction cryptographique est de type AES, DES, Triple DES, Twofish, ou Serpent, ou encore une fonction de hachage appliquée à la donnée à chiffrer (RN, CB1, CB2, CB3) et à la clé secrète (SK).

7. Dispositif de chiffrement par flux, comprenant un circuit de génération (SCG) d'un flux binaire de chiffrement (BS) et un circuit logique de combinaison réversible (LGS1, LGS2) de chaque bit d'un flux de données à chiffrer ou à déchiffrer avec un bit du flux binaire de chiffrement,
   **caractérisé en ce que** le circuit de génération (SCG) comprend un circuit de chiffrement par bloc (BCIP) pour générer un bloc d'entrée (CB), et un circuit logique (SCIP) de combinaison des bits du bloc d'entrée, fournissant le flux binaire de chiffrement à partir du bloc d'entrée, le circuit (SCG) mettant en oeuvre le procédé selon l'une des revendications 1 à 6.

8. Dispositif selon la revendication 7, dans lequel le circuit logique de combinaison (SCIP) comprend un circuit logique de fourniture (LGF2) pour générer des bits du flux binaire de chiffrement (BS) en fonction de bits du bloc d'entrée (CB), et un circuit logique de mise à jour (LGF1) pour combiner des bits du bloc d'entrée et remplacer des bits du bloc d'entrée (CB) par des bits résultant de la combinaison.

9. Dispositif selon la revendication 8, dans lequel le circuit logique de mise à jour (LGF1) est configuré pour que chaque bit du bloc d'entrée mis à jour dépende de tous les bits du bloc d'entrée fournit par le circuit de chiffrement par bloc (BCIP), à l'issue d'un certain nombre de cycles de traitement du circuit logique de mise à jour.

10. Dispositif selon la revendication 7 ou 9, dans lequel le circuit logique de combinaison (SCIP) comprend un registre à décalage de bloc (RSR) recevant le bloc chiffré (CB) qui est décalé à chaque cycle de traitement du circuit logique de combinaison d'un nombre de bits égal à un nombre de bits du flux binaire de chiffrement (BS) fourni à chaque cycle de traitement du circuit logique de combinaison, et des portes logiques (LG1-LG4) pour fournir les bits du flux binaire de chiffrement en combinant plusieurs des bits du registre à décalage.

11. Dispositif selon l'une des revendications 7 à 10, dans lequel le circuit logique de combinaison (SCIP) comprend un registre à décalage de bloc (RSR) recevant le bloc chiffré (CB) qui est décalé à chaque cycle de traitement du circuit logique de combinaison d'un nombre de bits égal à un nombre de bits du flux binaire de chiffrement (BS) fourni à chaque cycle de traitement du circuit logique de combinaison, et des circuits logiques non linéaires (NLF1-NLF4) pour combiner des bits du registre à décalage et introduire des bits obtenus par les circuits logiques non linéaires dans le registre à décalage.

12. Dispositif selon la revendication 11, dans lequel les circuits logiques non linéaires (NLF1-NLF4) comprennent chacun plusieurs entrées de mot (X, Y, Z) recevant chacune un mot du registre à décalage de bloc (RSR), plusieurs registres à décalage de mot (ROT1-ROT9) par entrée de mot, pour faire tourner sur eux-mêmes d'un certain nombre de bits les bits d'une entrée de mot, plusieurs fonctions logiques de combinaison (LF1, LF2, LF3) pour combiner entre eux les bits de plusieurs mots contenus dans un registre à décalage de mot, et fournissant chacune un mot, et des portes logiques (XOG) pour combiner entre eux les bits des mots de sortie des fonctions logiques de combinaison et fournir un mot de sortie qui est introduit dans le registre à décalage de bloc.

13. Dispositif selon l'une des revendications 7 à 12, dans lequel le circuit logique de combinaison (SCIP) est configuré pour fournir des bits du flux binaire de chiffrement (BS) à chacun des cycles d'un signal d'horloge cadençant le circuit logique de combinaison.

14. Dispositif selon l'une des revendications 7 à 13, dans lequel le circuit logique de combinaison (SCIP) comprend un registre à décalage de bloc (RSR) recevant le bloc chiffré (CB) qui est décalé à chacun des cycles d'un signal d'horloge cadençant le circuit logique de combinaison, le circuit logique de combinaison étant configuré pour mettre à jour au moins une partie du registre à décalage de bloc à chacun des cycles du signal d'horloge, en utilisant une partie la plus grande possible du registre à décalage de bloc, sans pénaliser la durée des cycles d'horloge.

Fig. 1

Fig. 2

Fig. 3

Fig. 4

Fig. 5

Fig. 6

Fig. 7

Europäisches
Patentamt

European
Patent Office

Office européen
des brevets

## RAPPORT DE RECHERCHE EUROPEENNE

Numéro de la demande

EP 11 17 3633

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2007/060587 A1 (KONINKL PHILIPS ELECTRONICS NV [NL]; EPSTEIN MICHAEL A [US]; GOODMAN J) 31 mai 2007 (2007-05-31) * pages 1-5; figures 1a-c * ----- | 1-14 | INV. H04L9/22 |
| X | US 2006/023875 A1 (GRAUNKE GARY L [US]) 2 février 2006 (2006-02-02) * pages 1-3; figures 1-4 * ----- | 1-14 | |
| X | MITSUYAMA Y ET AL: "VLSI implementation of high performance burst mode for 128-bit block ciphers", ASIC/SOC CONFERENCE, 2001. PROCEEDINGS. 14TH ANNUAL IEEE INTERNATIONAL SEPT. 12-15, 2001, PISCATAWAY, NJ, USA,IEEE, 12 septembre 2001 (2001-09-12), pages 3-7, XP010560746, ISBN: 978-0-7803-6741-8 * pages 3-7 * ----- | 1-14 | |
| Y | EP 0 635 956 A2 (CANON KK [JP]) 25 janvier 1995 (1995-01-25) * pages 3,4,10; figures 1b,10 * ----- | 1-14 | DOMAINES TECHNIQUES RECHERCHES (IPC) H04L |
| Y | WO 2008/049046 A2 (QUALCOMM INC [US]; ROSE GREGORY GORDON [US]; HAWKES PHILIP MICHAEL [US] 24 avril 2008 (2008-04-24) * pages 1-5,9,10,15;figure 1 * ----- | 1-14 | |
| A | US 2009/296928 A1 (MATSUMOTO MAKOTO [JP] ET AL) 3 décembre 2009 (2009-12-03) * pages 1-6; figures 4,5 * ----- | 1-14 | |

Le présent rapport a été établi pour toutes les revendications

| Lieu de la recherche | Date d'achèvement de la recherche | Examinateur |
|---|---|---|
| Munich | 5 décembre 2011 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 17 3633

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-12-2011

| Document brevet cité au rapport de recherche | Date de publication | Membre(s) de la famille de brevet(s) | Date de publication |
|---|---|---|---|
| WO 2007060587 A1 | 31-05-2007 | CN 101313509 A | 26-11-2008 |
| | | EP 1955473 A1 | 13-08-2008 |
| | | JP 2009516976 A | 23-04-2009 |
| | | KR 20080073348 A | 08-08-2008 |
| | | WO 2007060587 A1 | 31-05-2007 |
| US 2006023875 A1 | 02-02-2006 | CN 1993922 A | 04-07-2007 |
| | | EP 1779584 A1 | 02-05-2007 |
| | | KR 20070039161 A | 11-04-2007 |
| | | US 2006023875 A1 | 02-02-2006 |
| | | WO 2006012363 A1 | 02-02-2006 |
| EP 0635956 A2 | 25-01-1995 | AT 252796 T | 15-11-2003 |
| | | AU 693444 B2 | 02-07-1998 |
| | | AU 6754594 A | 02-02-1995 |
| | | CA 2128115 A1 | 21-01-1995 |
| | | DE 69433257 D1 | 27-11-2003 |
| | | DE 69433257 T2 | 10-09-2009 |
| | | EP 0635956 A2 | 25-01-1995 |
| | | US 5600720 A | 04-02-1997 |
| WO 2008049046 A2 | 24-04-2008 | TW 200828938 A | 01-07-2008 |
| | | US 2008095370 A1 | 24-04-2008 |
| | | WO 2008049046 A2 | 24-04-2008 |
| US 2009296928 A1 | 03-12-2009 | DE 112006001221 T5 | 27-03-2008 |
| | | JP 4774509 B2 | 14-09-2011 |
| | | JP 2006317802 A | 24-11-2006 |
| | | US 2009296928 A1 | 03-12-2009 |
| | | US 2011087951 A1 | 14-04-2011 |
| | | WO 2006121149 A1 | 16-11-2006 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FLAVIO D. GARCIA ; PETER VAN ROSSUM ; ROEL VERDULT ; RONNY WICHERS SCHREUR.** *Dismantling SecureMemory, CryptoMemory and CryptoRF,* 30 Mars 2010